(19) **Europäisches Patentamt / European Patent Office / Office européen des brevets**

(11) **EP 3 002 620 B1**

(12) **FASCICULE DE BREVET EUROPEEN**

(45) Date de publication et mention de la délivrance du brevet:
**09.03.2022 Bulletin 2022/10**

(21) Numéro de dépôt: **15187391.6**

(22) Date de dépôt: **29.09.2015**

(51) Classification Internationale des Brevets (IPC):
**G02B 13/16** *(2006.01)*      **G02B 23/12** *(2006.01)*
**H04N 5/33** *(2006.01)*

(52) Classification Coopérative des Brevets (CPC):
**G02B 13/16; G02B 23/12**

(54) **PROCEDE DE REALISATION D'UN SYSTEME DE CAPTATION D'IMAGES A BAS NIVEAU DE LUMIERE ET SYSTEME DE CAPTATION D'IMAGES A BAS NIVEAU DE LUMIERE ASSOCIE**

HERSTELLUNGSVERFAHREN EINES BILDERFASSUNGSSYSTEMS BEI GERINGER LICHTSTÄRKE, UND ENTSPRECHENDES BILDERFASSUNGSSYSTEM BEI GERINGER LICHTSTÄRKE

METHOD FOR PRODUCING A LOW-LIGHT IMAGE SENSING SYSTEM AND ASSOCIATED OW-LIGHT IMAGE SENSING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2014 FR 1402240**

(43) Date de publication de la demande:
**06.04.2016 Bulletin 2016/14**

(73) Titulaire: **THALES**
**92400 Courbevoie (FR)**

(72) Inventeurs:
• **NARCY, Gabriel**
  **42570 SAINT HEAND (FR)**
• **SIGONNAUD, Eric**
  **42340 VEAUCHE (FR)**

(74) Mandataire: **Marks & Clerk France**
**Immeuble "Visium"**
**22, avenue Aristide Briand**
**94117 Arcueil Cedex (FR)**

(56) Documents cités:
**US-A- 5 886 835      US-A1- 2008 157 000**
**US-A1- 2012 206 823**

EP 3 002 620 B1

**Description**

Le domaine de l'invention est celui des systèmes de captation d'images numériques à bas niveau de lumière. Les images ainsi obtenues ont de multiples applications liées à la nécessité de voir de nuit dans un certain nombre de domaines techniques ou industriels liés à la sécurité et à la protection.

Il existe différents moyens pour capter une image de faible ou de très faible luminance. Un grand nombre d'équipements utilisent des tubes à intensificateurs de lumière. Le principe de fonctionnement d'un tube à intensificateur consiste à former une image à bas niveau de lumière sur la surface d'une photocathode. Celle-ci émet des électrons proportionnellement aux photons reçus. On amplifie ces électrons au moyen d'une galette de micro-canaux et d'une haute tension. A la sortie de l'amplification, les électrons sont reçus par un écran phosphorescent qui donne une image amplifiée de l'image initiale. Les tubes à intensificateur actuels sont très performants. A titre d'exemple, les résolutions des images amplifiées atteignent, sur une surface de sortie de 18 mm de diamètre, typiquement de 64 à 72 pl/mm, pl/mm signifiant paire de lignes par millimètre, soit l'équivalent de 2300 à 2500 points par ligne. Leur sensibilité permet la captation d'images en temps réel par nuit dite de niveau 5, c'est-à-dire avec un éclairement typique de scène compris entre 0.1 mlux et 0.7 mlux, ce qui correspond à une nuit sans lune. Ces systèmes possèdent, de plus, un contrôle automatique de gain, intégrant également une fonction « auto-gaging » qui permet d'adapter l'amplification du tube intensificateur lorsque les conditions d'éclairement changent, notamment quand des sources intenses sont présentes dans le champ. On peut ainsi travailler jusqu'à des niveaux d'éclairement de l'ordre de 1000 lux.

L'inconvénient majeur des tubes à intensificateurs est que l'image amplifiée reste analogique et ne peut donc être utilisée directement par les systèmes numériques de traitement, de stockage et de transmission d'images.

Un système de ce type est connu de l'art antérieur US 2012/206823 A1.

Pour résoudre ce problème, plusieurs solutions techniques ont été proposées. La première est de remplacer le tube intensificateur par un capteur photosensible capable de délivrer un signal vidéo. Il en existe de deux types :

- A état solide de type « SCMOS », acronyme signifiant « Scalable Complementary Metal-Oxide Semiconductor », « CMOS » », acronyme signifiant « Complementary Metal-Oxide Semiconductor », « CCD », acronyme signifiant « Charge Coupled Device » ou « EMCCD » acronyme signifiant « Electron Multiplying Complementary Metal-Oxide Semiconductor », ou
- Amplifiés de type « EBCMOS » acronyme signifiant « Electron Bombarded Complementary Metal-Oxide Semiconductor », « EBCCD », acronyme signifiant « Electron Bombarded Charge Coupled Device » ou encore « MCPCMOS », acronyme signifiant « Micro Channel Plate Complementary Metal-Oxide Semiconductor ».

Aucun de ces capteurs ne présente l'ensemble des performances d'un intensificateur, c'est-à-dire la sensibilité aux faibles éclairements inférieurs à 0.3 mlux, la haute résolution supérieure ou égale à 72 pl/mm, les faibles consommations électriques n'excédant pas 100 mW, les hautes dynamiques et l'utilisation en temps réel.

La seconde solution technique consiste à coupler l'écran phosphorescent du tube intensificateur avec un capteur numérique classique qui peut être un capteur de type CCD. On combine ainsi les avantages du tube intensificateur avec ceux d'un capteur d'images numériques. Le couplage optique entre le tube et son capteur associé n'est pas un problème simple. En effet, ce couplage optique ne doit pas dégrader la qualité de l'image donnée par le tube intensificateur et doit avoir une transmission suffisante pour que l'éclairement du capteur reste compatible de son rapport signal/bruit.

Ce couplage peut se faire au moyen d'un transport d'images par un faisceau de fibres optiques. Les brevets CA 2 157 755 intitulé « Camera System for Imaging at Low Light Levels » et GB 2 317 772 intitulé « Automatic exposure and gain control for a sensor using video feedback » exposent des solutions de ce type. Cependant, cette solution présente plusieurs inconvénients difficiles à surmonter qui sont :

- Inadaptation de la forme circulaire des fibres à un pavage jointif de la surface de l'écran phosphorescent ;
- Pertes géométriques de transmission dues à la gaine des fibres optiques, seuls les cœurs des fibres optiques assurant la conduction de la lumière ;
- Pertes de Fresnel aux interfaces d'entrée et de sortie des fibres optiques ;
- Pertes de transmission dues aux ouvertures numériques limitées des fibres optiques ;
- Pertes de résolution dans le champ, en comparaison notamment à la résolution d'un tube à sortie sur verre ;
- Fabrication et réglages complexes.

Le couplage peut également être assuré par un transport optique réfractif ou catadioptrique qui ne présente pas les limitations structurelles précédentes des transports par fibres optiques. En effet, il est toujours possible d'obtenir la résolution souhaitée et d'optimiser la transmission du système par des traitements réfléchissants dans le cas d'un transport catadioptrique ou antireflets dans le cas d'un transport réfractif, lesdits traitements étant adaptés aux longueurs d'onde d'émission de l'écran phosphorescent. Les demandes de brevet et brevets de références FR 2 858 050 intitulé « Lunette de tir de vision nocturne à deux oculaires », US 2002/0030163 intitulé « Image intensifier and LWIR fusion/combination system », WO95/06388 intitulé « Life extender and bright light protection for CCTV camera system with image intensifier », US 2005/0162526 intitulé « Night-vision light-intensifier/camera structure and methodology » et US 6 326 604 intitulé « Optical intensification system, including an image intensifier for viewing an input source through a lens as a virtual image or as a real image » décrivent des solutions de ce type.

Cependant, ce transport optique doit respecter un certain nombre de contraintes de qualité optique, d'encombrement et de coût qui sont nécessairement antinomiques. La réalisation de l'optique de couplage est donc un compromis entre ces différentes contraintes. Il est donc important de parfaitement définir les caractéristiques de l'optique de couplage pour obtenir la juste performance. Le procédé selon l'invention permet d'optimiser le couplage optique de façon à obtenir à la fois une transmission, une résolution et un niveau d'éclairement satisfaisant, c'est-à-dire qui ne dégrade pas les performances du tube intensificateur tout en assurant la combinaison optique la plus simple possible. Cette optimisation est obtenue en jouant sur le gain d'amplification du tube intensificateur de façon à avoir une ouverture numérique de l'optique de couplage la plus faible possible sans sacrifier sa résolution. En effet, si l'ouverture numérique tombe en dessous d'un certain seuil, la diffraction commence à intervenir. Plus précisément, l'invention a pour objet un procédé de réalisation d'un système de captation d'images à bas niveau de suivant la revendication 1.

Avantageusement, l'optique de couplage est une optique centrée purement dioptrique.

Avantageusement, l'optique de couplage est du type télécentrique.

Avantageusement, l'optique de couplage comporte, dans cet ordre, à partir de l'écran phosphorescent et de sa fenêtre de sortie divergente, un groupe central comportant au moins quatre lentilles, la pupille optique de l'optique de couplage étant disposée au voisinage du centre de ce groupe central, et enfin une seconde lentille divergente.

Avantageusement, le grandissement de l'optique de couplage vaut environ 0.40 en valeur absolue, son ouverture numérique vaut environ F/3 et son encombrement est égal au diamètre de l'écran phosphorescent.

Avantageusement, le système de captation d'images à bas niveau de lumière comporte des moyens de filtrage optiques permettant de capter successivement des images dans deux ou plusieurs bandes spectrales différentes à une cadence compatible des fréquences d'acquisition vidéo.

L'invention concerne également un système de captation d'images suivant la revendication 6.

Avantageusement, le grandissement de l'optique de couplage vaut environ 0.40 en valeur absolue, son ouverture numérique vaut environ F/3 et son encombrement est égal au diamètre de l'écran phosphorescent.

L'invention sera mieux comprise et d'autres avantages apparaîtront à la lecture de la description qui va suivre donnée à titre non limitatif et grâce aux figures annexées parmi lesquelles :

La figure 1 représente le synoptique général d'un système de captation d'images à bas niveau de lumière selon l'invention ;
La figure 2 représente un premier type d'optique de couplage selon l'invention ;
La figure 3 représente un second type d'optique de couplage selon l'invention ;
La figure 4 représente l'image de l'écran phosphorescent sur le capteur photosensible ;
La figure 5 représente le diamètre de la tache de diffraction, image d'un objet ponctuel donnée par l'optique de couplage sur ledit écran phosphorescent ;
La figure 6 représente le synoptique général d'un système bispectral de captation d'images à bas niveau de lumière selon l'invention ;
La figure 7 représente un exemple de réalisation d'un premier type d'optique de couplage selon l'invention.

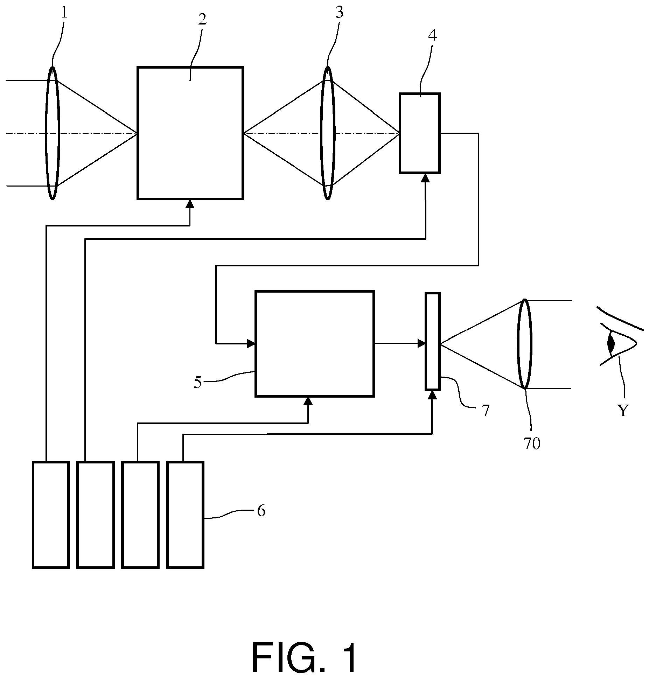

La figure 1 représente le synoptique général d'un système de captation d'images à bas niveau de lumière selon l'invention. Sur cette figure et sur les suivantes, les conventions suivantes ont été adoptées. Les différents composants du système de captation d'images figurent en traits gras. Les rayons lumineux centraux figurent en traits fins continus. Les rayons lumineux de bord de champ figurent en traits fins pointillés. Les liaisons électriques ou numériques sont représentées par des flèches. Tous les éléments de la chaîne d'imagerie sont sélectionnés pour offrir une réponse temps réel. Par exemple, le tube intensificateur peut comporter un phosphore de type P46 dont la durée de rémanence est courte.

Le système de captation d'images à bas niveau de lumière comprend :

- un objectif de focalisation 1 dont la fonction est de former l'image d'un paysage extérieur sur la photocathode d'un tube intensificateur 2 ;
- ledit tube intensificateur 2 comportant ladite photocathode, des moyens d'amplification et un écran phosphorescent 20 ;
- une optique de couplage 3 disposée entre ledit écran phosphorescent 20 et un capteur photosensible 4 de façon que l'image de l'écran 20 donnée par cette optique de couplage se forme sur la matrice de pixels 40 de ce capteur photosensible 4;

- ledit capteur matriciel 4 photosensible aux bas niveaux de lumière qui donne de l'image reçue par la matrice de pixels 40 une image numérique. Il est généralement du type CCD ou CMOS;
- une ou des unités 5 de traitement desdites images numériques fournissant des images traitées ;
- un écran de visualisation 7 qui peut être regardé directement par un utilisateur Y ou, comme on le voit sur la figure 1, au travers d'un oculaire 70 ;
- des alimentations électriques nécessaires au tube intensificateur 2, au capteur matriciel 4, aux unités de traitement 5 et à l'écran de visualisation 7 complètent le système de captation d'images.

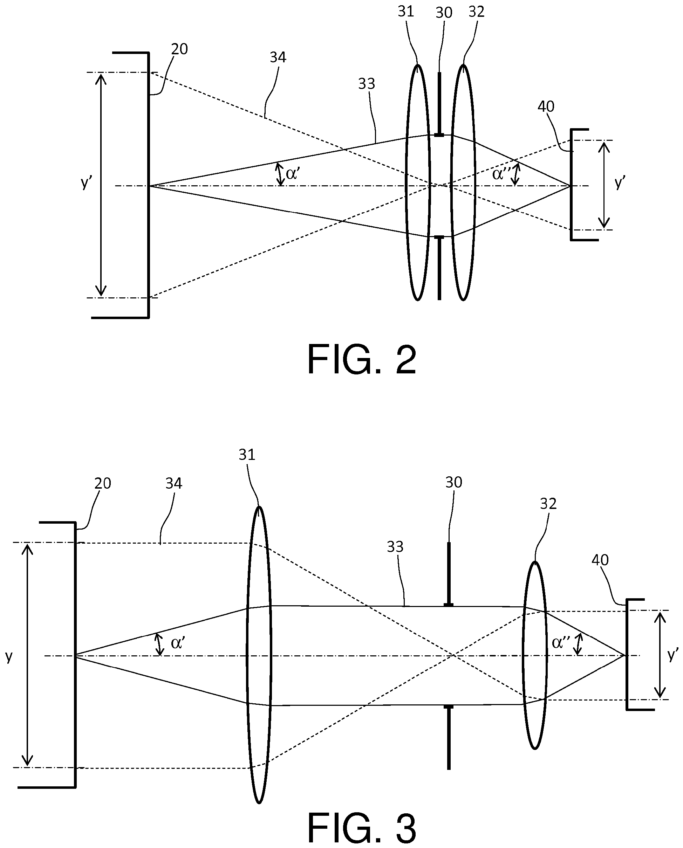

Dans le système de captation d'images selon l'invention, l'optique de couplage 3 est du type dioptrique centré, c'est-à-dire qu'elle ne comporte que des lentilles ou des lames de verre et qu'elle comporte un axe optique central. Pour assurer la conjugaison optique entre le plan de la photocathode et celui de la matrice de pixels, il existe différents types d'optiques dioptriques possibles. Le premier type est représenté sur la figure 2. L'optique de couplage 3 comporte des groupes convergents de lentilles, notés 31 et 32 sur cette figure 2, disposés de part et d'autre d'une pupille centrale 30. Sur la figure 2, la pupille 30 limite les rayons centraux 33. Ces groupes 31 et 32 comportent généralement des doublets optiques permettant de corriger les aberrations géométriques et le chromatisme. Des lentilles de champ divergentes non représentées sur la figure 2 disposées au voisinage des deux plans conjugués peuvent compléter la combinaison optique. Une des lentilles peut faire partie du tube en tant que fenêtre de sortie.

Cette solution optique permet d'obtenir à la fois une excellente qualité d'image et un encombrement réduit. Un inconvénient de la solution telle que représentée sur la figure 2, est que les rayons lumineux de bord de champ 34 sont généralement inclinés sur l'axe optique. Or, si la surface émettrice de la photocathode ou la surface réceptrice du capteur matriciel ne sont pas lambertiennes, la sensibilité au rayonnement lumineux du capteur matriciel peut être affectée dans le champ. De plus l'inclinaison du rayon moyen dans le champ conduit à des diminutions de l'angle solide projeté et de l'éclairement dans le champ du capteur CCD ou CMOS. Aussi, pour pallier cet inconvénient, l'optique de couplage peut être de type télécentrique comme représentée en figure 3.

Dans ce cas, l'optique de couplage 3 comporte deux groupes principaux convergents de lentilles notés 31 et 32 et un diaphragme d'ouverture 30. Le plan de la photocathode est disposé au foyer principal objet du premier groupe 31, le plan de la matrice de pixels est disposé au foyer image du second groupe 32. Les foyers image et objet respectifs des groupes 31 et 32 sont confondus en un point passant par le centre de la pupille 30. Avec cette configuration, comme on le voit sur la figure 3, les rayons lumineux principaux 34 dans le champ sont approximativement parallèles à l'axe optique. Ainsi, quelle que soit la répartition des indicatrices d'émission ou de réception de lumière, supposées invariantes, la sensibilité est conservée dans le champ de l'optique de couplage. Cette solution a l'inconvénient d'être plus encombrante que la précédente sauf si l'on utilise des lentilles de champ convergentes.

Dans une variante de l'invention, l'optique de couplage comprend des filtres permettant de ne conserver que le pic central d'émission du phosphore quand celui-ci est très prononcé, comme dans le cas du phosphore P43.

Quelle que soit la combinaison optique retenue, l'optique de couplage est nécessairement caractérisée par deux paramètres principaux qui sont son grandissement g et son ouverture N. Le procédé de réalisation d'une optique de couplage selon l'invention permet d'optimiser ces deux paramètres tout en conservant une sensibilité satisfaisante.

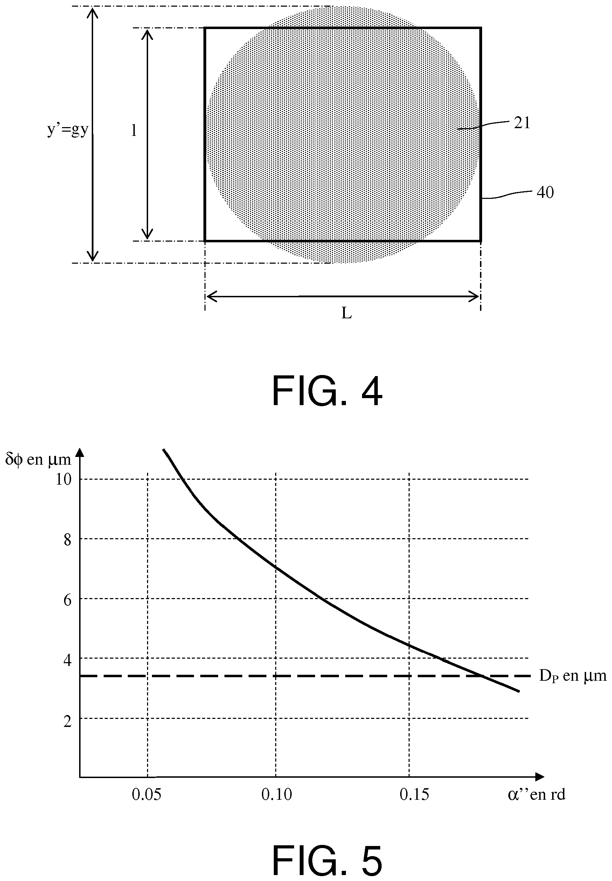

Comme on le voit sur la figure 4 qui représente l'image 21 de l'écran phosphorescent 20 sur l'écran matriciel 40, si y est le diamètre de l'écran phosphorescent, la taille y' de son image sur la matrice de pixels vaut g.y. Les écrans matriciels des capteurs photosensibles sont rectangulaires de largeur I et de longueur L. On ne peut donc pas ajuster parfaitement la taille de l'image à celle de l'écran de façon que l'image de l'écran phosphorescent soit de dimensions égales ou voisines des dimensions du capteur photosensible matriciel. Un bon compromis consiste à choisir le grandissement tel que y' soit égal à la longueur L. On perd ainsi un minimum de surface. Le grandissement g de l'optique de couplage vaut donc :

$$g = L/y \qquad\qquad \text{Equation 1}$$

Bien sûr, d'autres configurations sont possibles. Par exemple, si y' est égal à I, l'image de l'écran phosphorescent 20 est inscrite dans le rectangle IxL. Généralement, les matrices des capteurs sont de dimensions inférieures à celles des tubes intensificateurs. Par conséquent, le grandissement g est inférieur à 1 en valeur absolue. Dans le cas d'une optique dioptrique simple, sans foyer intermédiaire, les images sont inversées et le grandissement g est donc négatif.

L'ouverture d'une optique est une de ses caractéristiques essentielles. Elle correspond au demi-angle $\alpha'$ dans l'espace objet de l'optique de couplage et au demi-angle $\alpha''$ dans l'espace image de l'optique de couplage des figures 2 et 3. C'est un paramètre essentiel dans la mesure où plus l'ouverture est faible, plus l'optique est facile à réaliser et peut comprendre un minimum de lentilles. Ces deux demi-angles sont liés au grandissement g par la relation classique

$$g.\sin\alpha''=\sin\alpha' \quad g=y'/y.$$

Bien entendu, la résolution d'une optique, si parfaite soit elle, est limitée par la diffraction. En appelant $\delta\phi$ le diamètre de la tache de diffraction sur la surface du capteur matriciel et $\lambda$ la longueur d'onde moyenne du rayonnement issu de l'écran phosphorescent, on a la relation classique suivante :

$$\delta\phi=1.22.\lambda/\sin\alpha''$$

Pour une longueur d'onde moyenne égale à 0.55 $\mu$m, la formule se simplifie et on a :

$$\delta\phi=0.67.\lambda/\sin\alpha''$$

La figure 5 représente l'évolution du diamètre de cette tache en fonction de l'angle d'ouverture $\alpha''$. Pour choisir la bonne ouverture, le meilleur compromis possible est de choisir une ouverture donnant une tache de diffraction dont les dimensions sont inférieures ou de l'ordre de grandeur de celles du pixel du capteur photosensible qui vaut également quelques microns. Cette dimension $D_P$ correspond à la ligne horizontale en pointillés sur la figure 5.

On a alors la relation :
$\delta\phi=D_P=1.22.\lambda/\sin\alpha''$ soit encore

$$\sin\alpha''=1.22.\lambda/D_P \qquad \text{Equation 2}$$

L'équation 2 définit l'angle d'ouverture $\alpha''$ minimum en imposant un encombrement, on définit la focale de l'optique de couplage.

Le grandissement, la focale et l'ouverture de l'optique de couplage étant définis, il faut encore s'assurer que, pour une scène de luminance donnée $L_S$, la sensibilité de la totalité du système de captation d'images est suffisante pour que cette luminance soit correctement perçue, autrement dit, que le rapport signal sur bruit de la chaîne de sensibilité est suffisant.

En appelant S le nombre d'électrons émis par chaque pixel du capteur photosensible, on a la relation :

$$S = L_S.\left(\frac{\pi.T_{OBJ}}{4.N^2}\right).G.\eta_N.T_{OPC}.\sin(\alpha'')^2.s$$

avec les notations suivantes :

$T_{OBJ}$ correspond à la transmission optique de l'objectif 1 disposé devant l'intensificateur 2 ;

N correspond au nombre d'ouverture de l'objectif 1 disposé devant l'intensificateur 2 ;

G correspond au gain du tube intensificateur, c'est-à-dire le rapport de la luminance du phosphore à l'éclairement de la photocathode ;

$\eta_N$ correspond au rendement quantique de la photocathode du tube intensificateur ; et

$T_{OPC}$ correspond à la transmission optique de l'optique de couplage ;

s correspond à la surface du pixel

$L_S$ correspond à la luminance de la scène observée.

Il existe différentes façons d'exprimer le gain G du tube intensificateur. Généralement, le gain est exprimé en unité de luminance émise par l'écran phosphorescent par rapport à un niveau d'éclairement reçu par la photocathode. En unités anglo-saxonne, le gain est alors exprimé en FootLambert/Footcandle ou Fl/Fc. On peut facilement faire la conversion en unités métriques. Pour les très bas niveaux d'éclairement, le gain varie entre 20 000 Fl/Fc et 70 000 Fl/Fc. D'autres unités existent.

Si S correspond au signal et si $B_N$ est le bruit rapporté au niveau du capteur, alors $S/B_N$ est le rapport signal sur bruit. Il existe différentes façons d'exprimer ce rapport Ces définitions sont connues de l'homme du métier.

$B_N$ englobe le bruit de lecture du capteur et, aux très faibles niveaux de flux, le bruit statistique.

La relation qui définit le gain minimal $G_{MIN}$ d'intensification de façon que le signal soit du même ordre de grandeur que le bruit vaut :

$$G_{MIN} = (S/B_N).1/(K.\sin^2\alpha'') \quad \text{Equation 3}$$

K est une constante qui vaut :

$$K = .\left(\frac{\pi.T_{OBJ}}{4.N^2}\right).\eta_N.T_{OPC}.s$$

Ainsi, pour une ouverture α" donnée, il existe un gain d'amplification permettant d'obtenir les rendements photométriques souhaités. En réglant le grandissement, l'ouverture de l'optique de couplage et le gain de l'intensificateur selon les équations 1, 2 et 3, on obtient donc le meilleur compromis possible entre les performances du système et la facilité de réalisation de l'optique de couplage.

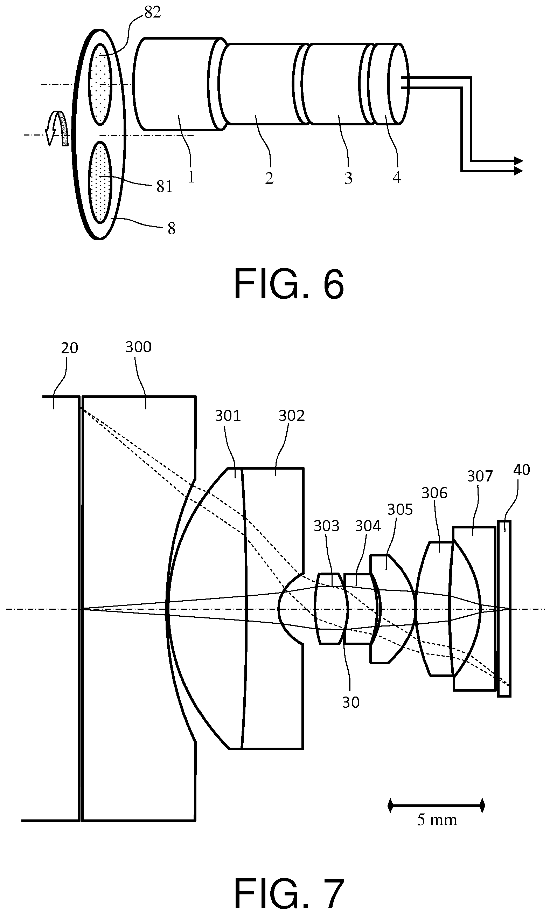

Dans tout ce qui précède, le système de captation d'images à bas niveau de lumière est monochrome. L'image donnée par le tube intensificateur est sensible à la luminance globale du paysage extérieur, indistinctement de sa composition spectrale. Il est possible de réaliser un système de captation d'images à bas niveau de lumière multispectral. La figure 6 représente un système de ce type. Pour rendre le système multispectral, on ajoute devant l'objectif de focalisation 1 un carrousel 8 portant plusieurs filtres spectraux 81 et 82 centrés sur différentes longueurs d'onde du spectre de sensibilité du tube intensificateur. Dans le cas particulier de la figure 6, le carrousel comporte deux filtres et le système est bispectral. Le carrousel tourne à une vitesse compatible des fréquences vidéo. Ainsi, le système donne alternativement une première image intensifiée dans la première bande spectrale couverte par le premier filtre et une seconde image intensifiée dans la seconde bande spectrale couverte par le second filtre. Les images une fois traitées en fausses couleur peuvent être affichées sur un moniteur couleur classique ou bi-chrome. Bien entendu, la transmission $T_{OBJ}$ de l'optique disposée devant l'intensificateur est affectée d'autant et d'autre part, le temps d'intégration pour chaque bande spectrale est divisé par au moins deux, ce qui signifie que le système doit être deux fois plus rapide. Dans ce cas, le gain minimum d'amplification doit être augmenté d'autant pour tenir compte de l'impact photométrique des filtres spectraux.

A titre d'exemple non limitatif, un système de captation d'images à bas niveau de lumière selon l'invention peut avoir les caractéristiques suivantes :

Intensificateur

- Ecran phosphorescent à phosphore de type « P43 » présentant un pic de réponse à la longueur d'onde de 550 nm
- Diamètre de l'écran : 18 mm
- Résolution : 64 pl/mm
- Eclairement équivalent au bruit d'obscurité : $2.5 \ 10^{-11}$ lm/cm$^2$
- Gain d'amplification supérieur à 100 000 lumen/lumen

Objectif IL

- Ouverture F/1.2
- Transmission 0.9

Capteur matriciel

- Type : CCD ou CMOS
- Longueur de l'écran : 7 mm - hauteur : 5.2 mm
- Résolution : 1920x1440 pixels
- Taille des pixels : 3.63 μm
- Bruit de lecture RMS : 3$^e$
- Cadence de lecture : Mono-spectral : 50 trames/s - bispectral : 100 trames/s
- Rendement quantique à λ = 0.55 μm : 0.55

Optique de couplage

- Type : dioptrique
- Grandissement : 0.387
- Ouverture numérique : F/3

- Encombrement entre la surface de l'écran phosphorescent et la surface du capteur photosensible : 21 mm
- Combinaison optique : 8 lentilles

Avec un tel dispositif, on montre que le rapport signal à bruit reste supérieur à 5 en fonctionnement bi-chrome pour une luminance de scène de 1 mlux.

Pour l'intensificateur, il est aussi possible de choisir un phosphore à temps de réponse très court, tel que le phosphore de type P46. Le système est alors compatible des hautes fréquences vidéo.

Une fois les principaux paramètres de l'optique de couplage définis, il est nécessaire de calculer sa combinaison optique.

La distorsion de l'optique de couplage peut être choisie afin d'augmenter le grandissement au centre du champ, et ainsi optimiser la résolution au centre du champ tout en conservant la couverture de format décrite ci-dessus.

L'optique de couplage peut être définie spécifiquement en fonction des caractéristiques des constituants optiques du système de captation d'image à bas niveau de lumière que sont d'une part l'objectif de focalisation en amont de l'intensificateur et l'oculaire en aval du système de captation d'images. Dans ce cas, la distorsion de l'optique de couplage peut être optimisée en fonction des distorsions de l'oculaire et de l'objectif de focalisation de manière à augmenter la résolution au centre du champ du système et ou homogénéiser la sensibilité sur toute la surface du détecteur. La fenêtre d'entrée du tube peut être affinée afin de réduire les encombrements.

La solution peut aussi consister en un capteur numérique à bas niveau de lumière dont les interfaces optoélectroniques sont définies afin de faciliter l'interfaçage avec tout type d'objectif et d'oculaire classiquement utilisés pour les applications de vision nocturne. Dans ce cas, si l'optique de couplage comporte de la distorsion, elle est compensée électroniquement pour que le capteur n'introduise pas de distorsion.

A titre d'exemple, la figure 7 représente une vue d'une combinaison optique non télécentrique et quasiment exempte de distorsion. Elle comporte, dans cet ordre, à partir de l'écran phosphorescent 20 d'abord une première lentille divergente 300 qui correspond à la fenêtre de sortie du tube, puis un premier doublet composé des lentilles 301 et 302, puis un second doublet composé des lentilles 303 et 304, puis deux lentilles convergentes 305 et 306 et enfin une seconde lentille divergente 307. La pupille optique 30 de l'optique de couplage étant disposée au voisinage du centre du second doublet. L'échelle indiquée « 5 mm » de la figure 7 permet de connaître les dimensions et les rayons de courbure des différentes lentilles.

Pour optimiser la combinaison optique, c'est-à-dire utiliser un minimum de dioptres tout en réduisant de façon significative les aberrations géométriques et chromatiques, on peut utiliser des associations de verre bas indice et haut indice. On peut utiliser des dioptres asphériques. On peut également utiliser des surfaces diffractives. Cette solution est particulièrement avantageuse si l'écran phosphorescent émet sur un spectre étroit, ce qui limite les problèmes de rendement de diffraction liés aux composants diffractifs.

Pour optimiser la transmission optique, les différents dioptres de l'optique de couplage comportent un traitement antireflet spécifiquement adapté au spectre d'émission de l'écran phosphorescent.

## Revendications

1. Procédé de réalisation d'un système de captation d'images à bas niveau de lumière, ledit système de captation d'images comprenant au moins :

   un intensificateur de lumière (2) comportant des moyens de réglage du gain d'amplification ayant un gain d'amplification minimal ($G_{MIN}$) et un écran phosphorescent (20) et ;
   un objectif (1) disposé devant l'intensificateur de lumière et;
   un capteur photosensible (4) de dimensions déterminées comportant une matrice de pixels élémentaires ;
   ladite optique de couplage (3) étant disposée entre ledit écran phosphorescent et ledit capteur photosensible de façon que l'image de l'écran donnée par ladite optique de couplage se forme sur ledit capteur photosensible, **caractérisé en ce que** le procédé de réalisation de ladite optique de couplage comporte au moins les étapes suivantes :

   Etape 1 : Calcul du grandissement de l'optique de couplage de façon que le grandissement de l'optique de couplage soit égal à la longueur du capteur photosensible divisé par le diamètre de l'écran phosphorescent ;
   Etape 2 : Calcul du nombre d'ouverture de l'optique de couplage de façon que le diamètre de la tache de diffraction, image d'un objet ponctuel donnée par l'optique de couplage sur ledit écran phosphorescent soit de l'ordre des dimensions des pixels élémentaires, ledit nombre d'ouverture dépendant du grandissement calculé à l'étape 1 ;

Etape 3 : Calcul du gain d'amplification minimal ($G_{MIN}$) de l'intensificateur de façon que, pour un minimum donné de luminance ($L_S$) de l'image captée par le système de captation d'image, le flux lumineux reçu par chaque pixel élémentaire soit égal au flux minimal donné par la sensibilité dudit capteur photosensible, ce gain étant égal à $G_{MIN} = (S/B_N).1/(K.\sin^2 a'')$

S correspondant au nombre d'électrons émis par chaque pixel du capteur photosensible, on a la relation :

$$S = L_s \left( \frac{\pi T_{OBJ}}{4.N^2} \right) G \eta_N \, T_{OPC} . \sin \left( \alpha'' \right)^2 s$$

K étant une constante valant:

$$K = \left( \frac{\pi.T_{OBJ}}{4.N^2} \right) \eta_N \, T_{OPC} . s$$

$B_N$ correspondant au bruit rapporté au niveau du capteur photosensible (4),
a" correspondant au demi-angle d'ouverture dans l'espace image de l'optique de couplage (3),
$T_{OBJ}$ correspondant à la transmission optique de l'objectif (1) disposé devant l'intensificateur de lumière (2);
$T_{OPC}$ correspond à la transmission optique de l'optique de couplage (3),
N correspondant au nombre d'ouverture de l'objectif (1),
G correspondant au gain du tube intensificateur (2), c'est-à-dire le rapport de la luminance du phosphore à l'éclairement de la photocathode,
$\eta_N$ correspondant au rendement quantique de la photocathode du tube intensificateur,
s correspondant à la surface du pixel.

2. Procédé de réalisation d'un système de captation d'images selon la revendication 1, **caractérisé en ce que** l'optique de couplage (31, 32) est une optique centrée purement dioptrique.

3. Procédé de réalisation d'un système de captation d'images selon la revendication 2, **caractérisé en ce que** l'optique de couplage (31, 32) est du type télécentrique.

4. Procédé de réalisation d'un système de captation d'images selon la revendication 2, **caractérisé en ce que** l'optique de couplage comporte, dans cet ordre, à partir de l'écran phosphorescent d'abord une première lentille divergente (300), puis un groupe central comportant au moins quatre lentilles (301, 302, 303, 304, 305, 306), la pupille optique (30) de l'optique de couplage étant disposée au voisinage du centre de ce groupe central, et enfin une seconde lentille divergente (307).

5. Procédé de réalisation d'un système de captation d'images selon la revendication 4, **caractérisé en ce que**, le grandissement de l'optique de couplage vaut environ 0.40 en valeur absolue, son ouverture numérique vaut environ F/3 et son encombrement est égal au diamètre de l'écran phosphorescent.

6. Système de captation d'images comprenant au moins :

   un objectif de focalisation (1) ;
   un intensificateur de lumière (2) comportant une photocathode, un dispositif électronique d'amplification, des moyens de réglage du gain d'amplification dudit dispositif ayant un gain d'amplification minimal (GMIN) et un écran phosphorescent;
   l'objectif de focalisation (1) étant disposé devant l'intensificateur de lumière;
   un capteur photosensible (4) de dimensions déterminées comportant une matrice de pixels élémentaires ; et une optique de couplage (3) disposée entre ledit écran phosphorescent et ledit capteur photosensible de façon que l'image de l'écran donnée par ladite optique de couplage se forme sur ledit capteur photosensible, **caractérisé en ce que** le système de captation d'images est réalisée selon un procédé comportant les étapes suivantes :

   Etape 1 : Calcul du grandissement de l'optique de couplage de façon que le grandissement de l'optique de couplage soit égal à la longueur du capteur photosensible divisé par le diamètre de l'écran phosphorescent ;

Etape 2 : Calcul du nombre d'ouverture de l'optique de couplage de façon que le diamètre de la tache de diffraction, image d'un objet ponctuel donnée par l'optique de couplage sur ledit écran phosphorescent soit de l'ordre des dimensions des pixels élémentaires, ledit nombre d'ouverture dépendant du grandissement calculé à l'étape 1 ;

Etape 3 : Calcul du gain d'amplification minimal de l'intensificateur de façon que, pour un minimum donné de luminance de l'image captée par le système de captation d'image, le flux lumineux reçu par chaque pixel élémentaire soit égal au flux minimal donné par la sensibilité dudit capteur photosensible, ce gain étant égal à $G_{MIN} = (S/B_N).1/(K.\sin^2 a")$

S correspondant au nombre d'électrons émis par chaque pixel du capteur photosensible, on a la relation :

$$S = L_s \left( \frac{\pi T_{OBJ}}{4.N^2} \right) G \eta_N T_{OPC} . \sin(\alpha")^2 s$$

K étant une constante valant:

$$K = \left( \frac{\pi.T_{OBJ}}{4.N^2} \right) \eta_N T_{OPC} . s$$

$B_N$ correspondant au bruit rapporté au niveau du capteur photosensible (4),

a" correspondant au demi-angle d'ouverture dans l'espace image de l'optique de couplage (3),

$T_{OBJ}$ correspondant à la transmission optique de l' objectif de focalisation (1) disposé devant l'intensificateur de lumière (2);

$T_{OPC}$ correspond à la transmission optique de l'optique de couplage (3),

N correspondant au nombre d'ouverture de l'objectif (1),

G correspondant au gain du tube intensificateur (2), c'est-à-dire le rapport de la luminance du phosphore à l'éclairement de la photocathode,

$\eta_N$ correspondant au rendement quantique de la photocathode du tube intensificateur,

s correspondant à la surface du pixel.

7. Système de captation d'images selon la revendication 6, **caractérisé en ce que** le grandissement de l'optique de couplage vaut environ 0.40, son ouverture numérique vaut environ F/3 et son encombrement est voisin du diamètre de l'écran phosphorescent.

8. Système de captation d'images selon l'une des revendications 6 ou 7, **caractérisé en ce que** le système de captation d'images à bas niveau de lumière comporte des moyens de filtrage optiques (8, 81, 82) permettant de capter successivement des images dans au moins deux bandes spectrales différentes à une cadence compatible des fréquences d'acquisition vidéo.

**Patentansprüche**

1. Verfahren zur Herstellung eines Bildaufnahmesystems mit niedrigem Lichtpegel, wobei das Bildaufnahmesystem mindestens Folgendes umfasst:

einen Lichtverstärker (2) mit Mitteln zum Regeln des Verstärkungsgrads mit einem minimalen Verstärkungsgrad ($G_{MIN}$) und einem phosphoreszierenden Bildschirm (20); und

ein Objektiv (1), das vor dem Lichtverstärker angeordnet ist; und

einen lichtempfindlichen Sensor (4) mit bestimmten Abmessungen, der eine Matrix von Elementarpixeln aufweist;

wobei die Kopplungsoptik (3) zwischen dem phosphoreszierenden Bildschirm und dem lichtempfindlichen Sensor so angeordnet ist, dass das von der Kopplungsoptik erzeugte Bild des Bildschirms auf dem lichtempfindlichen Sensor abgebildet wird,

**dadurch gekennzeichnet, dass** das Verfahren zur Herstellung der Kopplungsoptik mindestens die folgenden Schritte aufweist:

Schritt 1: Berechnen der Vergrößerung der Kopplungsoptik, so dass die Vergrößerung der Kopplungsoptik gleich der Länge des lichtempfindlichen Sensors dividiert durch den Durchmesser des phosphoreszierenden Bildschirms ist;

Schritt 2: Berechnen der Blendenzahl der Kopplungsoptik, so dass der Durchmesser des Beugungsflecks, d.h. das Bild eines durch die Kopplungsoptik auf dem phosphoreszierenden Bildschirm erzeugten Punktobjekts, in der Größenordnung der Abmessungen der Elementarpixel liegt, wobei die Blendenzahl von der in Schritt 1 berechneten Vergrößerung abhängt;

Schritt 3: Berechnen des minimalen Verstärkungsgrads ($G_{MIN}$) des Verstärkers, so dass für ein gegebenes Minimum der Leuchtdichte ($L_S$) des vom Bildaufnahmesystem aufgenommenen Bildes der von jedem Elementarpixel empfangene Lichtstrom gleich dem durch die Empfindlichkeit des lichtempfindlichen Sensors gegebenen minimalen Lichtstrom ist, wobei diese Verstärkung gleich $G_{MIN} = (S/B_N).1/(K.\sin^2 a'')$ ist, wobei S der Anzahl der Elektronen entspricht, die von jedem Pixel des lichtempfindlichen Sensors emittiert werden, wobei die Beziehung wie folgt ist:

$$S = L_S \left( \frac{\pi I_{OBJ}}{4.N^2} \right) G \eta_N I_{OPC} . \sin(\alpha'')^2 s \quad ,$$

wobei K eine Konstante mit dem folgenden Wert ist:

$$K = \left( \frac{\pi.I_{OBJ}}{4.N^2} \right) \eta_N I_{OPC} . s \quad ,$$

wobei $B_N$ dem an dem lichtempfindlichen Sensor (4) gemeldeten Rauschen entspricht,

a'' dem halben Öffnungswinkel im Bildraum der Kopplungsoptik (3) entspricht,

$T_{OBJ}$ der optischen Transmission des vor dem Lichtverstärker (2) angeordneten Objektivs (1) entspricht,

$T_{OPC}$ der optischen Transmission der Kopplungsoptik (3) entspricht,

N der Blendenzahl des Objektivs (1) entspricht,

G dem Verstärkungsgrad der Verstärkungsröhre (2), d.h. dem Verhältnis der Leuchtdichte des Phosphors zur Beleuchtungsstärke der Fotokathode, entspricht,

$\eta_N$ der Quantenausbeute der Fotokathode der Verstärkerröhre entspricht,

s der Oberfläche des Pixels entspricht.

2. Verfahren zur Herstellung eines Bildaufnahmesystems nach Anspruch 1, **dadurch gekennzeichnet, dass** die Kopplungsoptik (31, 32) eine rein dioptrische zentrierte Optik ist.

3. Verfahren zur Herstellung eines Bildaufnahmesystems nach Anspruch 2, **dadurch gekennzeichnet, dass** die Kopplungsoptik (31, 32) vom telezentrischen Typ ist.

4. Verfahren zur Herstellung eines Bildaufnahmesystems nach Anspruch 2, **dadurch gekennzeichnet, dass** die Kopplungsoptik in dieser Reihenfolge ausgehend vom phosphoreszierenden Bildschirm zunächst eine erste Zerstreuungslinse (300), dann eine zentrale Gruppe mit mindestens vier Linsen (301, 302, 303, 304, 305, 306), wobei die optische Pupille (30) der Kopplungsoptik in der Nähe des Zentrums dieser zentralen Gruppe angeordnet ist, und schließlich eine zweite Zerstreuungslinse (307) aufweist.

5. Verfahren zur Herstellung eines Bildaufnahmesystems nach Anspruch 4, **dadurch gekennzeichnet, dass** die Vergrößerung der Kopplungsoptik etwa 0,40 als Absolutwert beträgt, ihre numerische Apertur etwa F/3 beträgt und ihr Platzbedarf gleich dem Durchmesser des phosphoreszierenden Bildschirms ist.

6. Bildaufnahmesystem, das mindestens Folgendes umfasst:

ein Fokussierungsobjektiv (1);

einen Lichtverstärker (2), der eine Fotokathode, eine elektronische Verstärkungsvorrichtung, Mittel zum Regeln des Verstärkungsgrads der Vorrichtung mit einem minimalen Verstärkungsgrad ($G_{MIN}$) und einen phosphoreszierenden Bildschirm aufweist;

wobei das Fokussierungsobjektiv (1) vor dem Lichtverstärker angeordnet ist;

einen lichtempfindlichen Sensor (4) mit bestimmten Abmessungen, der eine Matrix aus Elementarpixeln aufweist; und

eine Kopplungsoptik (3), die zwischen dem phosphoreszierenden Bildschirm und dem lichtempfindlichen Sensor angeordnet ist, so dass das von der Kopplungsoptik erzeugte Bild des Bildschirms auf dem lichtempfindlichen Sensor abgebildet wird,

**dadurch gekennzeichnet, dass** das Bildaufnahmesystem mit einem Verfahren durchgeführt wird, das die folgenden Schritte aufweist:

Schritt 1: Berechnen der Vergrößerung der Kopplungsoptik, so dass die Vergrößerung der Kopplungsoptik gleich der Länge des lichtempfindlichen Sensors dividiert durch den Durchmesser des phosphoreszierenden Bildschirms ist;

Schritt 2: Berechnen der Blendenzahl der Kopplungsoptik, so dass der Durchmesser des Beugungsflecks, d.h. das Bild eines durch die Kopplungsoptik auf dem phosphoreszierenden Bildschirm erzeugten Punktobjekts, in der Größenordnung der Abmessungen der Elementarpixel liegt, wobei die Blendenzahl von der in Schritt 1 berechneten Vergrößerung abhängt;

Schritt 3: Berechnen des minimalen Verstärkungsgrads des Verstärkers, so dass für ein gegebenes Minimum der Leuchtdichte des vom Bildaufnahmesystem aufgenommenen Bildes der von jedem Elementarpixel empfangene Lichtstrom gleich dem durch die Empfindlichkeit des lichtempfindlichen Sensors gegebenen minimalen Lichtstrom ist, wobei dieser Verstärkungsgrad gleich $G_{MIN} = (S/B_N).1/(K.\sin^2 a'')$ ist,

wobei S der Anzahl der Elektronen entspricht, die von jedem Pixel des lichtempfindlichen Sensors emittiert werden, wobei die Beziehung wie folgt ist:

$$S = L_s \left( \frac{\pi I_{OBJ}}{4.N^2} \right) G \eta_N T_{OPC} . \sin\left(\alpha''\right)^2 s$$

wobei K eine Konstante mit dem folgenden Wert ist:

$$K = \left( \frac{\pi . I_{OBJ}}{4.N^2} \right) \eta_N T_{OPC} . s$$

wobei $B_N$ dem an dem lichtempfindlichen Sensor (4) gemeldeten Rauschen entspricht,

a" dem halben Öffnungswinkel im Bildraum der Kopplungsoptik (3) entspricht,

$T_{OBJ}$ der optischen Transmission des vor dem Lichtverstärker (2) angeordneten Objektivs (1) entspricht,

$T_{OPC}$ der optischen Transmission der Kopplungsoptik (3) entspricht,

N der Blendenzahl des Objektivs (1) entspricht,

G dem Verstärkungsgrad der Verstärkungsröhre (2), d.h. dem Verhältnis der Leuchtdichte des Phosphors zur Beleuchtungsstärke der Fotokathode, entspricht,

$\eta_N$ der Quantenausbeute der Fotokathode der Verstärkerröhre entspricht,

s der Oberfläche des Pixels entspricht.

7. Bildaufnahmesystem nach Anspruch 6, **dadurch gekennzeichnet, dass** die Vergrößerung der Kopplungsoptik etwa 0,40, ihre numerische Apertur etwa F/3 beträgt und ihr Platzbedarf in der Nähe des Durchmessers des phosphoreszierenden Bildschirms liegt.

8. Bildaufnahmesystem nach Anspruch 6 oder 7, **dadurch gekennzeichnet, dass** das Bildaufnahmesystem bei niedrigem Lichtpegel optische Filtermittel (8, 81, 82) aufweist, die es zulassen, nacheinander Bilder in mindestens zwei verschiedenen Spektralbändern in einem mit den Videoerfassungsfrequenzen kompatiblen Takt aufzunehmen.

**Claims**

1. A method for producing a low-light level image capture system, said image capture system comprising at least:

one light intensifier (2) having means for adjusting amplification gain having a minimum amplification gain ($G_{MIN}$) and a phosphorescent screen (20); and

one objective lens (1) disposed in front of the light intensifier; and

one light sensitive sensor (4) with specific dimensions having a matrix of elementary pixels;
said coupling optic (3) being disposed between said phosphorescent screen and said light sensitive sensor so that the image of the screen provided by said coupling optic forms on said light sensitive sensor, **characterised in that** the method for producing said coupling optic has at least the following steps:

Step 1: computing the magnification of the coupling optic so that the magnification of the coupling optic is equal to the length of the light sensitive sensor divided by the diameter of the phosphorescent screen;
Step 2: computing the f-number of the coupling optic so that the diameter of the diffraction spot, which is the image of a point object provided by the coupling optic on said phosphorescent screen, is of the order of the dimensions of the elementary pixels, with said f-number depending on the magnification computed in step 1;
Step 3: computing the minimum amplification gain ($G_{MIN}$) of the intensifier so that, for a given minimum of luminance ($L_S$) of the image captured by the image capture system, the luminous flux received by each elementary pixel is equal to the minimum flux provided by the sensitivity of said light sensitive sensor, with this gain being equal to $G_{MIN} = (S/B_N).1/(K.\sin^2 a")$,
with S corresponding to the number of electrons emitted by each pixel of the light sensitive sensor, the following relation is applicable:

$$S = L_s \left( \frac{\pi T_{OBJ}}{4.N^2} \right) G \eta_N T_{OPC} . \sin\left(\alpha''\right)^2 s \quad ,$$

with K being a constant equalling:

$$K = \left( \frac{\pi.T_{OBJ}}{4.N^2} \right) \eta_N T_{OPC} . s \quad ,$$

with $B_N$ corresponding to the noise reported at the level of the light sensitive sensor (4),
with a" corresponding to the half-angle of aperture in the image space of the coupling optic (3),
with $T_{OBJ}$ corresponding to the optical transmission of the objective lens (1) disposed in front of the light intensifier (2),
with $T_{OPC}$ corresponding to the optical transmission of the coupling optic (3),
with N corresponding to the f-number of the objective lens (1),
with G corresponding to the gain of the intensifier tube (2), i.e. the ratio of the luminance of the phosphorus to the illumination of the photocathode,
with $\eta_N$ corresponding to the quantum yield of the photocathode of the intensifier tube,
with s corresponding to the surface of the pixel.

2. The method for producing an image capture system according to claim 1, **characterised in that** the coupling optic (31, 32) is a purely dioptric centred optic.

3. The method for producing an image capture system according to claim 2, **characterised in that** the coupling optic (31, 32) is of the telecentric type.

4. The method for producing an image capture system according to claim 2, **characterised in that** the coupling optic has, in this order, from the phosphorescent screen, firstly, a first divergent lens (300), then a central group having at least four lenses (301, 302, 303, 304, 305, 306), with the optical pupil (30) of the coupling optic being disposed in the vicinity of the centre of this central group, and, finally, a second divergent lens (307).

5. The method for producing an image capture system according to claim 4, **characterised in that** the magnification of the coupling optic equals approximately 0.40 as an absolute value, its digital aperture equals approximately F/3 and its spatial requirement is equal to the diameter of the phosphorescent screen.

6. An image capture system comprising at least:

one focusing objective lens (1);

one light intensifier (2) having a photocathode, an electronic amplification device, means for adjusting the amplification gain of said device having a minimum amplification gain ($G_{MIN}$) and a phosphorescent screen;

with the focusing objective lens (1) being disposed in front of the light intensifier;

one light sensitive sensor (4) with specific dimensions having a matrix of elementary pixels; and

a coupling optic (3) disposed between said phosphorescent screen and said light sensitive sensor so that the image of the screen provided by said coupling optic forms on said light sensitive sensor;

**characterised in that** the image capture system is produced in accordance with a method having the following steps:

Step 1: computing the magnification of the coupling optic so that the magnification of the coupling optic is equal to the length of the light sensitive sensor divided by the diameter of the phosphorescent screen;

Step 2: computing the f-number of the coupling optic so that the diameter of the diffraction spot, which is the image of a point object provided by the coupling optic on said phosphorescent screen, is of the order of the dimensions of the elementary pixels, said f-number depending on the magnification computed in step 1;

Step 3: computing the minimum amplification gain of the intensifier so that, for a given minimum of luminance of the image captured by the image capture system, the luminous flux received by each elementary pixel is equal to the minimum flux provided by the sensitivity of said light sensitive sensor, with this gain being equal to $G_{MIN} = (S/B_N).1/(K.\sin^2 a'')$,

with S corresponding to the number of electrons emitted by each pixel of the light sensitive sensor, the following relation is applicable:

$$S = L_S \left( \frac{\pi T_{OBJ}}{4.N^2} \right) G \eta_N T_{OPC} . \sin\left(\alpha''\right)^2 s \quad ,$$

with K being a constant equalling:

$$K = \left( \frac{\pi T_{OBJ}}{4.N^2} \right) \eta_N T_{OPC} . s \quad ,$$

with $B_N$ corresponding to the noise reported at the level of the light sensitive sensor (4),

with a" corresponding to the half-angle of aperture in the image space of the coupling optic (3),

with $T_{OBJ}$ corresponding to the optical transmission of the objective lens (1) disposed in front of the light intensifier (2),

with $T_{OPC}$ corresponding to the optical transmission of the coupling optic (3),

with N corresponding to the f-number of the objective lens (1),

with G corresponding to the gain of the intensifier tube (2), i.e. the ratio of the luminance of the phosphorus to the illumination of the photocathode,

with $\eta_N$ corresponding to the quantum yield of the photocathode of the intensifier tube,

with s corresponding to the surface of the pixel.

7. The image capture system according to claim 6, **characterised in that** the magnification of the coupling optic equals approximately 0.40, its digital aperture equals approximately F/3 and its spatial requirement is close to the diameter of the phosphorescent screen.

8. The image capture system as claimed in any of claims 6 or 7, **characterised in that** the low-light level image capture system has optical filtering means (8, 81, 82) allowing images to be successively captured in at least two different spectral bands at a rate that is compatible with video acquisition frequencies.

FIG. 1

FIG. 2

FIG. 3

## FIG. 4

## FIG. 5

# FIG. 6

# FIG. 7

5 mm

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012206823 A1
- CA 2157755
- GB 2317772 A
- FR 2858050
- US 20020030163 A
- WO 9506388 A
- US 20050162526 A
- US 6326604 B